# EUROPÄISCHE PATENTSCHRIFT

(11) **EP 0 911 563 B1**
(45) Veröffentlichungstag und Bekanntmachung des Hinweises auf die Patenterteilung: **08.05.2002**
(21) Anmeldenummer: 98116650.7
(22) Anmeldetag: 03.09.1998
(51) Int. Cl.: F16L 3/137, F16L 3/233

(54) **Halteband**
Bundle tie
Collier de serrage

(30) Priorität: 21.10.1997 DE 19746424
(43) Veröffentlichungstag der Anmeldung: 28.04.1999
(73) Patentinhaber: TRW Automotive Electronics & Components GmbH & Co. KG, 78315 Radolfzell (DE)
(72) Erfinder: Kraus, Willibald, 67269 Grünstadt (DE)
(74) Vertreter: Schieschke, Klaus, Dipl.-Ing.

(56) Entgegenhaltungen:
- EP-A- 0 709 609
- DE-A- 19 540 418
- US-A- 3 149 808

## Beschreibung

Die Erfindung bezieht sich auf ein Halteband zum Haltern von rohrförmigen Gegenständen, insbesondere von Kabeln, mit einem Bandelement mit Rastverzahnungen, wobei das Bandelement an einem Ende in einen Haltebereich mit Verrastungen zum Arretieren der Rastverzahnungen übergeht und im Abstand zu dem Haltebereich ein an einem Träger zu befestigendes Lagerelement aufweist.

Als Stand der Technik sind bereits derartige Konstruktionen von Haltebändern bekannt (DE-OS 20 45 300, FR-PS 1 462 539). Diese Konstruktionen sind so beschaffen, dass das Lagerelement eine einstückige Einheit mit dem Bandelement bildet und damit eine unveränderliche Fixierung aufweist.

Zum Stand der Technik zählt weiterhin ein Halteband, dessen Bandelement so ausgestaltet ist, dass es an seinen gegenüberliegenden Längsseiten mit Rastzähnen versehen ist (DE 32 18 961 A1).

Nachteilig ist bei den vorgenannten Ausführungsformen die unveränderliche. Fixierung des Lagerelements auf dem Bandelement. Damit ist der Einsatzbereich eines derartigen Haltebandes erheblich eingeschränkt, da es nicht möglich ist, den Abstand des Haltebereichs zum Lagerbereich den in der Praxis auftretenden Forderungen anzupassen.

US-A-3 149 808 zeigt ein Halteband mit einem verstellbaren und permanent lösbaren Lagerelement.

Entsprechend liegt der vorliegenden Erfindung die Aufgabe zugrunde, eine Konstruktion zu schaffen, bei welcher das Halteband einen wesentlich größeren Anwendungsbereich besitzt, um beispielsweise Rohre bzw. Kabel unterschiedlichsten Durchmessers einwandfrei an einem Träger zu haltern.

Diese Aufgabe wird erfindungsgemäß dadurch gelöst, dass das Lagerelement im Anfangszustand über mindestens ein Filmscharnier mit dem Bandelement verbunden und nach Brechen des Filmscharniers auf dem Bandelement verschiebbar und arretierbar ist. Hierdurch ergibt sich Vorteil, dass das Lagerelement in seinem Abstand gegenüber dem Haltebereich verändert werden kann und damit in jedem Fall eine gute Anpassung an die in der Praxis vorliegenden Erfordernisse ermöglicht wird.

Bei einem Halteband, dessen Bandelement an seinen gegenüberliegenden Längsachsen mit Rastzähnen versehen ist, besteht die Möglichkeit, dass das Lagerelement quer zur Längsachse des Bandelementes mindestens eine in die Rastzähne einlagerbare Rastnase aufweist. Das Lagerelement kann hierbei oberhalb einer mit dem Träger zu verbindenden Lagerstelle vier Stege aufweisen, wobei an mindestens einem quer zur Längsachse des Bandelements gegenüberliegenden Steg die Rastnase angeordnet ist. Diese Rastnase lagert sich entsprechend den in der Praxis auftretenden Erfordernissen in mindestens einen Rastzahn des Bandelements ein, wobei der Abstand zwischen dem Lagerelement und dem Haltebereich innerhalb der Länge des Bandelementes beliebig veränderbar ist.

In vorteilhafter Weiterbildung der Erfindung können zwei Stege mit Längsführungen versehen sein. Weiterhin kann mindestens ein Filmscharnier quer zur Längsachse des Bandelementes zwischen zwei gegenüberliegenden Stegen angeordnet sein, so dass die gesamte Einheit in einem Spritzvorgang herzustellen ist. Bei der Fertigung ist damit das Lagerelement fixiert mit dem Bandelement verbunden. Erst nach Brechen des Filmscharniers oder der Filmscharniere lässt sich in der praktischen Anwendung das Lagerelement gegenüber dem Haltebereich entsprechend den zu halternden Gegenständen, beispielsweise Rohren oder Kabeln, funktionsrichtig einstellen.

In weiterer Ausgestaltung der Erfindung kann das Lagerelement oberhalb der Stege schalenförmig ausgebildet sein, wobei beispielsweise zwei im Abstand voneinander liegende Schalenauflagen Anwendung finden. Hierbei besteht die Möglichkeit, dass diese Schalenauflagen außenseitig in Stege übergehen, welche zur Aufnahme von Steckhaltern ausgebildet sind. Diese Steckhalter können beispielsweise Rohre umfassen. Alternativ besteht auch die Möglichkeit, dass das Lagerelement einen Zapfen mit Abschlusskopf aufweist, welcher in eine Konstruktion mit Nut einlagerbar ist, um ein entsprechendes Element zu haltern.

Nach einem anderen Merkmal der Erfindung kann das Lagerelement zwischen der Lagerstelle und den Stegen mindestens eine Dichtlippe aufweisen, wobei diese Dichtlippe mit mindestens einer Durchbrechung versehen ist.

Der Haltebereich kann zwei gegenüberliegende Verrastungen besitzen, welche jeweils mit mindestens einem Rastzahn versehen sind. Die Verrastungen sind vorteilhafterweise an federnden Stegen des Haltebereichs angeordnet, welche in einen Einschubschlitz des Haltebereichs übergehen. Dieser Haltebereich kann in Draufsicht rechteckig ausgebildet sein und im unteren Bereich zwei Querstege und einen Längssteg besitzen.

Die Erfindung wird nachfolgend anhand eines in der Zeichnung dargestellten Ausführungsbeispiels näher beschrieben. In der Zeichnung zeigen:
- Fig. 1: eine perspektivische Ansicht eines Haltebandes;
- Fig. 2: eine Draufsicht auf das Halteband nach Fig. 1;
- Fig. 3: einen Schnitt nach der Linie III-III in Fig. 2.

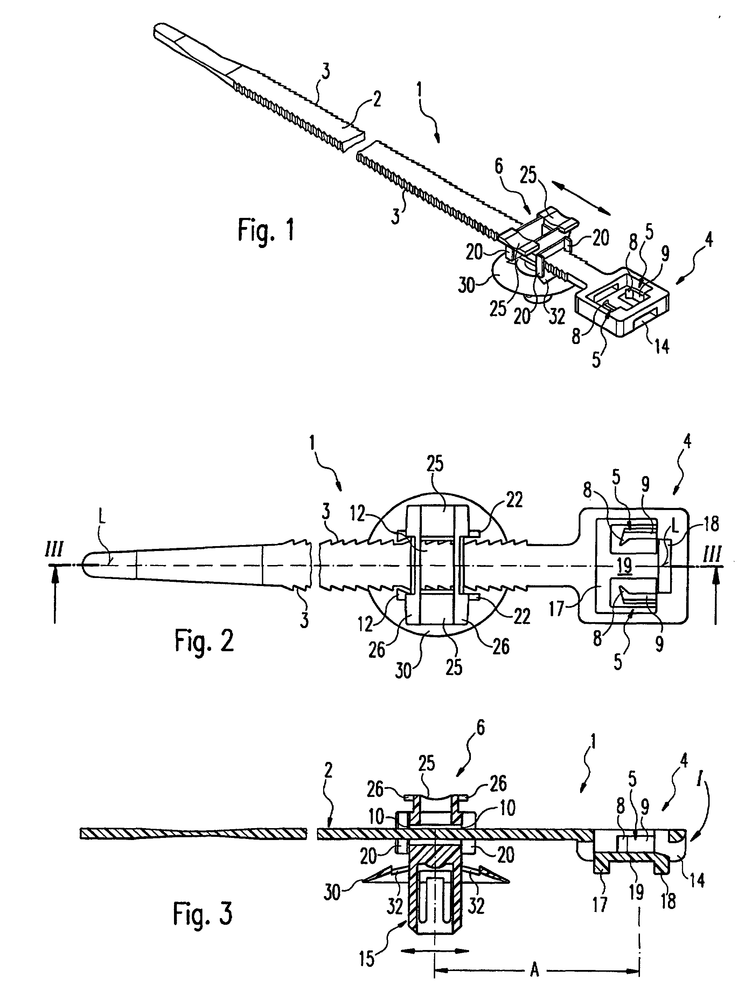

In den Fig. 1 bis 3 ist ein aus Kunststoff bestehendes Halteband 1 dargestellt, welches zum Haltern von nicht näher dargestellten rohrförmigen Gegenständen, beispielsweise von Rohren oder Kabeln, auf einem nicht näher dargestellten Träger dient.

Dieses Halteband 1 weist im Wesentlichen ein Bandelement 2 mit Rastverzahnungen 3 auf, wobei das Bandelement 2 an einem Ende in einen Haltebereich 4 mit Verrastungen 5 zum Arretieren der Rastverzahnungen 3 übergeht.

Im Abstand zu dem Haltebereich 4 befindet sich auf dem Bandelement ein an einem nicht näher dargestellten Träger zu befestigender Lagerelement 6.

Das Lagerelement 6 ist im Anfangszustand über mindestens ein Filmschamier 10 mit dem Bandelement 2 verbunden (Fig. 3). Bei der Fertigung bildet damit das Halteband 1 insgesamt eine einstückige Einheit, d.h. das Lagerelement 6 ist z.B. über zwei quer zur Längsachse L-L des Bandelements 2 verlaufende Filmscharniere einstückig mit dem Bandelement 2 verbunden.

Das Bandelement 2 ist so gestaltet, dass es an seinen gegenüberliegenden Längsseiten mit den Rastzähnen 3 versehen ist. Das Lagerelement 6 weist nach Fig. 2 quer zur Längsachse L-L des Bandelements 2 mindestens eine in die Rastzähne einlagerbare Rastnase 12 auf. Diese Rastnase 12 ist nach Fig. 2 an einem Steg 20 angeordnet, welcher sich oberhalb einer mit dem Träger zu verbindenden Lagerstelle 15 des Lagerelements 6 befindet. Aus Fig. 2 geht weiterhin hervor, dass zwei weitere Stege 20 mit Längsführungen 22 für das Bandelement 2 versehen sein können. Bei dem dargestellten Ausführungsbeispiel finden zwei Rastnasen 12 Anwendung, welche an zwei Stegen 20 angeordnet sind.

Zur Montage des erfindungsgemäßen Haltebandes werden die beiden Filmscharniere 10 gebrochen, so dass es möglich ist, mit Hilfe der erfindungsgemäßen Konstruktion das Lagerelement 6 in Pfeilrichtung auf dem Bandelement 2 hin und her zu verschieben und einen funktionsrichtigen Abstand gegenüber dem Haltebereich 4 herzustellen (Fig. 3). Die beiden Rastnasen 12 der Stege 20 lagern sich in entsprechende Rastzähne 3 des Bandelements 2 ein und sichern damit das Lagerelement 6 in der gewünschten Position.

Aus Fig. 1 und Fig. 3 geht darüber hinaus hervor, dass das Lagerelement 6 oberhalb der Stege 20 schalenförmig ausgebildet ist. Gemäß Fig. 2 können zwei im Abstand voneinander liegende Schalenauflagen 25 Anwendung finden. Diese Schalenauflagen 25 sind beispielsweise außenseitig mit Stegen 26 versehen, welche zur Aufnahme von nicht näher dargestellten Steckhaltern ausgebildet sind. Diese Steckhalter weisen beispielsweise im Abstand voneinander liegende Nuten auf, in welche sich die Stege 26 der Schalenauflagen 25 einlagern.

Statt der vorgenannten Konstruktion besteht auch die nicht näher dargestellte Möglichkeit, das Lagerelement 6 oberhalb der vier Stege 20 mit einem Zapfen mit Kopf auszustatten, welcher in eine Nut eines anderen Teils einschiebbar ist.

Aus den Zeichnungen ist ersichtlich, dass das Lagerelement 6 zwischen der Lagerstelle 15 und den Stegen 20 mindestens eine Dichtlippe 30 aufweist. Diese Dichtlippe 30 kann nach Fig. 3 mit mindestens einer Durchbrechung 33 versehen sein; im vorliegenden Fall liegen sich nach Fig. 3 zwei Durchbrechungen 32 gegenüber. Die Lagerstelle 15 kann beliebig ausgebildet sein, beispielsweise - wie in den Zeichnungen dargestellt - mit zwei gegenüberliegenden federnden Eingriffsstegen versehen sein. Es besteht auch die Möglichkeit, die Lagerstelle 15 als Tannenbaumzapfen auszubilden oder als Hohlzylinder mit inneren Eingriffselementen.

Insbesondere aus Fig. 2 geht hervor, dass der Haltebereich 4 die zwei gegenüberliegenden Verrastungen 5 aufweist, welche jeweils mit mindestens einem Rastzahn 8 versehen sind. Es besteht auch die Möglichkeit, zwei Rastzähne 8 hintereinander an jeder Verrastung 5 anzuordnen. Die Verrastungen 5 liegen vorteilhafterweise am vorderen Bereich von federnden Stegen 9, wobei diese federnden Stege 9 nach Fig. 1 und 3 in einen Einschubschlitz 14 des Haltebereichs 4 übergehen.

Gemäß Fig. 1 und 2 kann der Haltebereich 4 beispielsweise in Draufsicht rechteckig ausgebildet sein und im unteren Bereich zwei Querstege 17 und 18 und einen Längssteg 19 aufweisen.

Erfindungsgemäß besteht die Möglichkeit, den Haltebereich in beliebiger geometrischer Form auszubilden.

Nachdem das Lagerelement 6 zu dem Haltebereich 4 in dem funktionsrichtigen Abstand A eingestellt und mit Hilfe der Rastnasen 12 in dieser Lage fixiert wurde, lassen sich nunmehr beispielsweise Rohre oder Kabel auf die Schalenauflagen 25 auflegen und mit Hilfe des Bandelements 2 umschlingen. Das Bandelement wird nach diesem Umschlingen in Pfeilrichtung I in den Einschubschlitz 14 des Haltebereichs 4 eingeführt, wobei sich anschließend die Rastzähne 8 in die Rastzähne 3 des Bandelements 2 einlagern und damit die gesamte Anordnung sichern

Infolge der Verstellmöglichkeit des Lagerelements 6 bezüglich des Haltebereichs 4 ergibt sich ein sehr weiter Anwendungsbereich des erfindungsgemäßen Haltebandes.

## Patentansprüche

1. Halteband zum Haltern von rohrförmigen Gegenständen, insbesondere von Kabeln mit einem Bandelement (2) mit Rastverzahnungen (3), wobei das Bandelement (2) an einem Ende in einen Haltebereich (4) mit Verrastungen (5) zum Arretieren der Rastverzahnungen (3) übergeht und im Abstand zu dem Haltebereich (4) ein an einem Träger zu befestigendes Lagerelement (6) aufweist,
**dadurch gekennzeichnet,**
**dass** das Lagerelement (6) im Anfangszustand über mindestens ein Filmscharnier (10) mit dem Bandelement (2) verbunden und nach Brechen des Filmscharniers (10) auf dem Bandelement (2) verschiebbar und arretierbar ist.

2. Halteband nach Anspruch 1, dessen Bandelement (2) an seinen gegenüberliegenden Längsseiten mit Rastzähnen (3) versehen ist,
**dadurch gekennzeichnet,**
**dass** das Lagerelement (6) quer zur Längsachse (L-L) des Bandelements (2) mindestens eine in die Rastzähne (3) einlagerbare Rastnase (12) aufweist.

3. Halteband nach Anspruch 2,
**dadurch gekennzeichnet,**
**dass** das Lagerelement (6) oberhalb einer mit dem Träger zu verbindenden Lagerstelle (15) vier Stege (20) aufweist, wobei an mindestens einem quer zur Längsachse des Bandelementes (2) gegenüberliegenden Steg (20) die Rastnase (12) angeordnet ist.

4. Halteband nach Anspruch 3,
**dadurch gekennzeichnet,**
**dass** zwei Stege (20) mit Längsführungen (22) versehen sind.

5. Halteband nach Anspruch 1 bis 4,
**dadurch gekennzeichnet,**
**dass** mindestens ein Filmscharnier (10) quer zur Längsachse des Bandelements (2) zwischen zwei gegenüberliegenden Stegen (20) angeordnet ist.

6. Halteband nach einem der vorhergehenden Ansprüche,
**dadurch gekennzeichnet,**
**dass** das Lagerelement (6) oberhalb der Stege (20) schalenförmig ausgebildet ist.

7. Halteband nach Anspruch 6,
**gekennzeichnet durch**
zwei Schalenauflagen (25) oberhalb der Stege (20).

8. Halteband nach Anspruch 7,
**dadurch gekennzeichnet,**
**dass** die Schalenauflagen (25) außenseitig in Stege (26) übergehen, welche insbesondere zur Aufnahme von Steckhaltern ausgebildet sind.

9. Halteband nach Anspruch 3,
**dadurch gekennzeichnet,**
**dass** das Lagerelement (6) zwischen der Lagerstelle (15) und den Stegen (20) mindestens eine Dichtlippe (30) aufweist

10. Halteband nach Anspruch 9,
**dadurch gekennzeichnet,**
**dass** die Dichtlippe (30) mit mindestens einer Durchbrechung (32) versehen ist.

11. Halteband nach einem oder mehreren der vorhergehenden Ansprüche,
**dadurch gekennzeichnet,**
**dass** der Haltebereich (4) mindestens eine Verrastung (5) aufweist, welche mit mindestens einem Rastzahn (8) versehen sind.

12. Halteband nach Anspruch 11,
**dadurch gekennzeichnet,**
**dass** die Verrastung (5) an einem federnden Steg (9) des Haltebereichs (4) angeordnet ist.

13. Halteband nach Anspruch 11 und 12,
**dadurch gekennzeichnet,**
**dass** die federnden Stege (9) in einen Einschubschlitz (14) des Haltebereichs (4) übergehen.

14. Halteband nach Anspruch 11 bis 13,
**dadurch gekennzeichnet,**
**dass** der in beliebiger geometrischer Form ausgebildete Haltebereich (4) in Draufsicht im unteren Bereich zwei Querstege (17, 18) und einen Längssteg (19) aufweist.

## Claims

1. Retaining strap for securing tubular objects, in particular cables, having a strap element (2) with latching teeth arrangements (3), the strap element (2) merging at one end into a retaining region (4) having latching means (5) for locking the latching teeth arrangements (3) in place, and having, at a distance from the retaining region (4), a bearing element (6) to be fastened to a support,
**characterized**
**in that** in the initial position the bearing element (6) is connected to the strap element (2) via at least one film hinge (10) and, after the film hinge (10) is broken, can be displaced and locked in place on the strap element (2).

2. Retaining strap according to Claim 1, the strap element (2) of which is provided with latching teeth (3) on its opposite longitudinal sides,
**characterized**
**in that** the bearing element (6) has, transversely with respect to the longitudinal axis (L-L) of the strap element (2), at least one latching lug (12) which can be inserted into the latching teeth (3).

3. Retaining strap according to Claim 2,
**characterized**
**in that** above a bearing point (15) to be connected to the support the bearing element (6) has four webs (20), the latching lug (12) being arranged transversely with respect to the longitudinal axis of the strap element (2) on at least one opposite web (20).

4. Retaining strap according to Claim 3,
**characterized**
**in that** two webs (20) are provided with longitudinal guides (22).

5. Retaining strap according to Claims 1 to 4,
**characterized**
**in that** at least one film hinge (20) is arranged transversely with respect to the longitudinal axis of the strap element (2) between two opposite webs (20).

6. Retaining strap according to one of the preceding claims,
**characterized**
**in that** the bearing element (6) is of shell-shaped design above the webs (20).

7. Retaining strap according to Claim 6,
**characterized by**
two shell-type supports (25) above the webs (20).

8. Retaining strap according to Claim 7,
**characterized**
**in that** the shell-type supports (25) merge on the outside into webs (26) which are designed in particular for accommodating plug-in holders.

9. Retaining strap according to Claim 3,
**characterized**
**in that** the bearing element (6) has at least one sealing lip (30) between the bearing point (15) and the webs (20).

10. Retaining strap according to Claim 9,
**characterized in that** the sealing lip (30) is provided with at least one aperture (32).

11. Retaining strap according to one or more of the preceding claims,
**characterized**
**in that** the retaining region (4) has at least one latching means (5) which is provided with at least one latching tooth (8).

12. Retaining strap according to Claim 11,
**characterized**
**in that** the latching means (5) is arranged on a resilient web (9) of the retaining region (4).

13. Retaining strap according to Claims 11 and 12,
**characterized**
**in that** the resilient webs (9) merge into an insertion slot (14) in the retaining region (4).

14. Retaining strap according to Claims 11 to 13,
**characterized**
**in that** the retaining region (4), which is designed in any desired geometrical form, has, in plan view, two transverse webs (17, 18) and one longitudinal web (19) in the lower region.

## Revendications

1. Collier de retenue servant à retenir des objets de forme tubulaire, notamment des câbles, comportant un élément en forme de bande (2) pourvu de dentures d'encliquetage (3), et dans lequel l'élément en forme de bande (2) se prolonge, au niveau d'une extrémité, par une partie de retenue (4) comportant des éléments d'encliquetage (5) servant à bloquer les dentures d'encliquetage (3) et comporte, à distance de la zone de retenue (4), un élément de support (6) devant être fixé à un support, **caractérisé en ce que** l'élément de support (6) est relié, à l'état initial, à l'élément en forme de bande (2) par l'intermédiaire d'au moins une charnière en forme de film (10) et, après rupture de la charnière en forme de film (10), peut être déplacé et arrêté sur l'élément en forme de bande (2).

2. Collier de retenue selon la revendication 1, dont l'élément en forme de bande (2) comporte, sur ses côtés longitudinaux opposés, des dents d'encliquetage (3), **caractérisé en ce que** l'élément de support (6) possède, transversalement par rapport à l'axe longitudinal (L-L) de l'élément en forme de bande (2), au moins un bec d'encliquetage (12) pouvant être inséré dans les dents d'encliquetage (3).

3. Collier de retenue selon la revendication 2, **caractérisé en ce que** l'élément de support (6) comporte quatre barrettes (20), au-dessus d'un point de palier (15) devant être relié au support, le bec d'encliquetage (12) étant disposé sur au moins une barrette (20) disposée transversalement par rapport à l'axe longitudinal de l'élément en forme de bande (2).

4. Collier de retenue selon la revendication 3, **caractérisé en ce que** deux barrettes (20) sont équipées de guides longitudinaux (22).

5. Collier de retenue selon les revendications 1 à 4, **caractérisé en ce qu'**au moins une charnière en forme de film (10) est disposée transversalement par rapport à l'axe longitudinal de l'élément en forme de bande (2) entre deux barrettes opposées (20).

6. Collier de retenue selon l'une des revendications précédentes, **caractérisé en ce que** l'élément de support (6) est agencé en forme de coque au-dessus des barrettes (20).

7. Collier de retenue selon la revendication 6, **caractérisé par** deux appuis (25) en forme de coques au-dessus des barrettes (20).

8. Collier de retenue selon la revendication 7, **caractérisé en ce que** les appuis en forme de coques (25) se prolongent, sur le côté extérieur, par des barrettes (26), qui sont agencées notamment pour la réception de dispositifs de retenue à enfichage.

9. Collier de retenue selon la revendication 3, **caractérisé en ce que** l'élément de support (6) comporte au moins une lèvre d'étanchéité (30) entre le point de support (15) et les barrettes (20).

10. Collier de retenue selon la revendication 9, **caractérisé en ce que** la lèvre d'étanchéité (30) est pourvue d'au moins un passage traversant (32).

11. Collier de retenue selon une ou plusieurs des revendications précédentes, **caractérisé en ce que** la partie de retenue (4) comporte au moins un organe d'encliquetage (5), qui est équipé d'au moins une dent d'encliquetage (8).

12. Collier de retenue selon la revendication 11, **caractérisé en ce que** le dispositif d'encliquetage (5) est disposé sur une barrette élastique (9) de la partie de retenue (4).

13. Collier de retenue selon les revendications 11 et 12, **caractérisé en ce que** les barrettes élastiques (9) se prolongent par une fente d'introduction (14) de la partie de retenue (4).

14. Collier de retenue selon les revendications 11 à 13, **caractérisé en ce que** la partie de retenue (4) agencée avec une forme géométrique quelconque comporte, selon une vue en plan, dans sa partie inférieure, deux barrettes transversales (17,18) et une barrette longitudinale (19).
